# EUROPÄISCHE PATENTSCHRIFT

(11) **EP 2 209 262 B1**
(45) Veröffentlichungstag und Bekanntmachung des Hinweises auf die Patenterteilung: **25.10.2017**
(21) Anmeldenummer: 10000456.3
(22) Anmeldetag: 19.01.2010
(51) Int. Cl.: H04L 12/40, H04L 12/10, H04L 12/24, H04B 3/54, H04L 12/46

(54) **Buskoppler mit Netzteil**
Bus coupler with adapter
Coupleur de bus doté d'un élément de réseau

(30) Priorität: 19.01.2009 DE 102009005431
(43) Veröffentlichungstag der Anmeldung: 21.07.2010
(73) Patentinhaber: WILO SE, 44263 Dortmund (DE)
(72) Erfinder: Brockmann, Markus, 44532 Lünen (DE)
(74) Vertreter: Cohausz Hannig Borkowski Wißgott

(56) Entgegenhaltungen:
- EP-A1- 1 838 032
- EP-A1- 1 942 600
- WO-A1-2007/012074

## Beschreibung

Die vorliegende Erfindung betrifft einen Buskoppler zur Verbindung zumindest eines Leistung über eine Busleitung beziehenden Busteilnehmers für die Gebäudeautomation mit einer primären Busleitung, mit einer Trenneinrichtung zur galvanischen Entkopplung des Busteilnehmers von der primären Busleitung, wobei der Busteilnehmer über eine sekundäre Busleitung mit dem Buskoppler verbindbar ist, die durch die Trenneinrichtung von der primären Busleitung entkoppelt ist, wobei der Buskoppler eine Spannungsversorgung zur Einspeisung einer Busspannung in die sekundäre Busleitung und eine Steuerungselektronik zur Steuerung der Spannungsversorgung und der Busspannung der sekundären Busleitung aufweist, und die Spannungsversorgung und die Steuerungselektronik eine konstruktive Einheit bilden.

Ein Buskoppler mit diesen Merkmalen, der für die Übertragung von Daten und Leistung über Ethemet eingerichtet ist und ein Leistungsmanagement aufgrund des IEEE Power over Ethernet (PoE) Standards 802.3af durchführt, ist aus der europäischen Patentanmeldung EP 1 942 600 A1 bekannt. Ein ähnlicher Ethernet-Buskoppler, der diesen Standard verwendet, wird in der europäischen Patentanmeldung EP 1 838 032 beschrieben.

Aus der EP 1 942 600 A1 und EP 1 838 032 A1 ist es bekannt, Bussysteme mit einer Busleitung und einer daran angeschlossenen Vielzahl von Busgeräten auszubilden. Der Bus dient der Datenübertragung und ersetzt eine parallele Verdrahtung der einzelnen Busgeräte durch eine einzige Busleitung, die die Busgeräte in serieller Verkabelung miteinander verbindet. Über den Bus können sowohl digitale als auch analoge Daten- und/oder Steuersignale übertragen werden.

Es ist weiterhin bekannt, Bussysteme an einer zentralen Stelle mit einer Spannungsversorgung zu verbinden, die Leistung zur Versorgung der einzelnen Busteilnehmer in die Busleitung einspeist. Eine derartige Busversorgung ist in der Regel eine Gleichspannungsversorgung, die die übliche Netzspannung von 230 V, 50 Hz in eine Gleichspannung je nach Bustyp zwischen 5V und 30V umsetzt. Der Ausgang der Gleichspannungsversorgung ist unmittelbar mit der Busleitung verbunden.

Zur Ankopplung der einzelnen Busgeräte an die Busleitung, nachfolgend auch Feldbus genannt, dient ein Buskoppler, der digitale Ein- und Ausgangssignale verarbeitet. Aufgabe eines Buskopplers ist es, eine Vielzahl unterschiedlicher Signale zu bündeln und über ein einheitliches Bussignal zu einer das Bussystem steuernden zentralen Steuerung weiterzuleiten respektive Befehle von dieser zentralen Steuereinheit an die mit dem Buskoppler in Verbindung stehenden Busgeräte weiterzugeben. Buskoppler können mit eigener Intelligenz ausgebildet sein und so kleine Steuerungsaufgaben dezentral, d.h. ohne Eingriff der zentralen Steuerungseinheit, nachfolgend Master genannt, übernehmen. Ein Buskoppler stellt damit eine Busanschalteinheit dar, die mit einer Schnittstelle zu einem Feldbus ausgestattet ist.

Derartige Bussysteme finden unter anderem in der Gebäudeautomatisierung Verwendung. Die an den Feldbus angeschlossenen Busteilnehmer können in diesem Falle durch Sensoren, Aktoren oder Bedienungseinheiten gebildet sein. Beispielsweise können als Sensoren Temperatur- oder Lichtsensoren, als Aktoren beispielsweise Motoren für Jalousien oder Rollläden, Stellglieder für Heizungsventile oder dezentrale Pumpen für Heizkörper, und als Bedienungseinheiten Schalter, Dimmer, Taster, Raumthermostate oder komplexe Raumbediengeräte verwendet werden. Die jeweils einem Raum zugeordneten Busteilnehmer sind nach dem Stand der Technik unmittelbar mit dem Feldbus über einen Buskoppler verbunden. Der Buskoppler enthält eine Entkopplungseinheit in der Art eines Filters, mit der die über den Feldbus übertragene Spannungsversorgung von der Datenübertragung getrennt wird.

Nicht selten kommt es vor, dass die Leitung zu einem Busteilnehmer in Folge nachträglicher Installationsarbeiten innerhalb eines Raumes beschädigt wird. Beispielsweise kann durch Anbringen von Befestigungsmitteln für ein aufzuhängendes Bild die Busleitung derart beschädigt werden, dass es zu einem Kurzschluss in der den Busteilnehmer versorgenden Leitung kommt. Dieser Störfall hat zur Folge, dass das gesamte Bussystem in seiner Funktion beeinträchtigt wird oder sogar vollständig zusammenbricht. Schlimmstenfalls kann eine irreversible Beschädigung der Busspannungsversorgung und/oder anderer Busteilnehmer erfolgen, so dass das gesamte Bussystem vollständig ausfällt und einzelne Geräte oder Gerätekomponenten ausgetauscht werden müssen. Eine Lösung für dieses Problem ist in der EP 1 942 600 A1 beschrieben, wonach eine dezentrale Einspeisung der Busspannung in die sekundäre Busleitung erfolgt. Dies gewährleistet, dass sich ein Störfall in einem Teilbereich des Bussystems hinter dem Buskoppler, der eine einen Busteilnehmer speisende Busleitung umfasst, nicht auf die übrigen Teilbereiche des Bussystems überträgt.

Die dezentrale Einspeisung einer Busspannung erfordert jedoch dezentrale Maßnahmen zu deren Steuerung, d.h. für das Leistungsmanagement auf der sekundären Busleitung. Hierfür schlagen die EP 1 942 600 A1 und EP 1 942 600 A1 vor, den IEEE Power over Ethernet (PoE) Standard 802.3af zu verwenden. Dieser lehrt, den charakteristischen Eingangswiderstand eines Busteilnehmers zu messen und zu klassifizieren, wobei anhand dieses Widerstands bzw. der Klasse bestimmt wird, wie hoch die Busspannung für einen speziellen Busteilnehmer sein soll. Nachteilig ist hierbei, dass immer nur genau ein Busteilnehmer an eine sekundären Busleitung angeschlossen werden kann, da anderenfalls der von dem Buskoppler aus gesehene Widerstand auf der sekundären Busleitung nicht der charakteristische Eingangswiderstand eines bestimmten Busteilnehmer wäre und daher nicht die richtige Busspannung zur Verfügung gestellt werden würde.

Es ist daher Aufgabe der Erfindung, einen Buskoppler zur Verfügung zu stellen, der einerseits eine hohe Betriebssicherheit eines Bussystems gewährleistet und andererseits eine alternative Busspannungssteuerung verwendet.

Diese Aufgabe wird durch einen Buskoppler mit den Merkmalen des Anspruchs 1 gelöst sowie durch ein Verfahren mit den Merkmalen des Anspruchs 10. Weiterbildungen der Erfindungen sind in den abhängigen Ansprüchen formuliert.

Es wird ein Buskoppler zur Verbindung zumindest eines Leistung über eine Busleitung beziehenden Busteilnehmers mit einer primären Busleitung vorgeschlagen, mit einer Trenneinrichtung zur galvanischen Entkopplung des Busteilnehmers von der primären Busleitung, wobei der Busteilnehmer über eine sekundäre Busleitung mit dem Buskoppler verbindbar ist, eine Spannungsversorgung zur Einspeisung einer Busspannung in die sekundäre Busleitung und eine Steuerungselektronik zur Steuerung der Spannungsversorgung und der Busspannung der sekundären Busleitung vorgesehen ist, wobei des Weiteren die Spannungsversorgung und die Steuerungselektronik eine konstruktive Einheit bilden und die Spannungsversorgung in Abhängigkeit von Steuerimpulsen, die über eine der beiden Busleitungen an die Steuerungselektronik übertragbar sind, von der Steuerungselektronik steuerbar ist.

Grundgedanke der vorliegenden Erfindung ist es, die von den Busteilnehmern aufgenommene Leistung und damit die vom Bus zur Verfügung gestellte Spannung einerseits dezentral einzuspeisen und andererseits die Steuerung der Busspannung in Abhängigkeit von Steuerimpulsen vorzunehmen, die die Steuerungselektronik über eine der beiden Busleitungen erhält. Dies hat den Vorteil, dass die Busteilnehmer nicht über die Primärbusleitung versorgt werden müssen, was insbesondere bei langen Busleitungen stets verlustbehaftet ist. Die dezentrale Einspeisung der Busspannung erfolgt erfindungsgemäß direkt bei der Sekundärbusleitung, an die der zumindest eine Busteilnehmer angeschlossen ist. Der Einspeisepunkt, auch Aufschaltpunkt genannt, liegt damit zwischen der Primärbusleitung und dem Busteilnehmer.

Weiterer Vorteil des vorgeschlagenen Buskopplers ist die Möglichkeit, eine aktive An- und Abschaltung der Spannungsversorgung respektive eine Verringerung der von der Spannungsversorgung gelieferten Busspannung durch die Steuerungselektronik durchzuführen. Hierfür wirkt die Steuerungselektronik auf die Spannungsversorgung ein. So kann beispielsweise im Störfall eine Abschaltung, im Leerlauffall der Busteilnehmer eine Abschaltung oder Verringerung der Busspannung auf einen minimal notwendigen Wert erfolgen. Alternativ kann durch entsprechende Steuerimpulse von einer zentralen Steuereinheit oder von einem Busteilnehmer, die die Steuerungselektronik erhält, eine An- oder Abschaltung der Spannungsversorgung oder auch eine Verringerung der Busspannung durch die Steuerungselektronik bewirkt werden.

Die Spannungsversorgung kann dazu eingerichtet sein, eine externe Spannungsquelle, insbesondere eine Netzspannung, in eine Busspannung umzuwandeln.

Die erfindungsgemäße Trenneinrichtung dient der galvanischen Entkopplung desjenigen Teils des Bussystems, das die Busteilnehmer umfasst, von der Primärbusleitung, an welche eine zentrale Steuerungseinrichtung, nachfolgend Master genannt, angeschlossen ist. Damit dient die Trenneinrichtung dazu, andere Teile des Bussystems, die aus Sicht einer Datenübertragung vom Master zum Busteilnehmer vor dem Buskoppler liegen, durch einen Störfall hinter dem Buskoppler nicht zu beeinflussen oder zu schädigen. Über die Trenneinrichtung erfolgt dabei eine reine Signalübertragung.

Erfindungsgemäß kann die Trenneinrichtung ein Übertrager mit magnetisch gekoppelten Spulen sein. Alternativ kann die Trenneinrichtung in Gestalt eine Optokopplers ausgebildet sein. Sowohl ein elektromagnetischer Übertrager als auch ein optischer Übertrager in Gestalt eines Optokopplers gewährleisten eine galvanische Entkopplung, respektive eine Datenübertragung einerseits, und verhindern gleichzeitig, dass sich eine Störung in der Busspannung hinter dem Buskoppler negativ auf die übrigen Teile des Bussystems auswirkt.

Die Trenneinrichtung kann von der primären Busleitung, alternativ von der sekundären Busleitung gespeist werden. Die Speisung von der primären Busleitung hat den Vorteil, dass die Trenneinrichtung insbesondere Datenimpulse unabhängig von dem Status der Spannungsversorgung an die Steuerungselektronik übertragen kann, insbesondere auch dann, wenn die Spannungsversorgung abgeschaltet ist. Der Master kann dann einen Aktivierungsimpuls senden, der von der Steuerungselektronik sicher erhalten wird. Die Speisung von der sekundären Busleitung hätte den Vorteil, dass die Trenneinrichtung ebenfalls mit abgeschaltet werden kann, so dass Leerlaufverluste oder die Leistungsaufnahme der Trenneinrichtung im Zustand der Betriebsbereitschaft reduziert werden können. Vorzugsweise kann die Trenneinrichtung einen Umschalter aufweisen, der von der Versorgung der Trennungsrichtung über die sekundäre Busleitung auf die Versorgung über die primäre Busleitung umschaltet, sobald die Spannungsversorgung abgeschaltet wird. Die Umschaltung kann vorzugsweise von der Steuerungselektronik bewirkt werden. Für den Betriebsfall, dass eine intensive Kommunikation über das Bussystem erfolgt und damit eine große Menge an Daten über die Trenneinrichtung übertragen wird, kann diese über die sekundäre Busleitung gespeist werden, so dass die primäre Busleitung nicht belastet wird. Ist die Kommunikation jedoch gering, so dass die Spannungsversorgung auf ein Minimum reduziert oder gar abgeschaltet werden kann, kann eine Umschaltung auf eine Versorgung der Trenneinrichtung aus der primären Busleitung erfolgen, die gerade ausreichend Energie zur Verfügung stellt, damit einzelne Impulse über die Trenneinrichtung an die Steuerelektronik übertragen werden können.

Auch die Steuerungselektronik kann wie die Trenneinrichtung von der primären Busleitung, alternativ von der sekundären Busleitung gespeist werden. Vorzugsweise kann auch die Steuerungselektronik einen Umschalter umfassen, mittels welchem zwischen einer Speisung aus der primären und einer Speisung aus der sekundären Busleistung gewechselt werden kann. Der Wechsel kann automatisch erfolgen, wobei die Steuerungselektronik dann auf eine Speisung aus der primären Busleitung wechseln kann, wenn die Spannungsversorgung abgeschaltet oder auf einen Minimalversorgungszustand geschaltet wird. Weiterhin kann ein Wechsel auf eine Speisung aus der sekundären Busleitung dann erfolgen, wenn die Spannungsversorgung angeschaltet oder auf einen Normalversorgungszustand geschaltet wird. In einer vorteilhaften Weiterbildung ist der Umschalter der Steuerungselektronik derselbe Umschalter, der die Speisung der Trenneinrichtung umschaltet.

Die Steuerungselektronik kann zwischen der Trenneinrichtung und der sekundären Busleitung angeordnet sein. Hierdurch wird gewährleistet, dass die Steuerungselektronik bei von der primärseitigen Busleitung gespeisten Trenneinrichtung einerseits vom Master einen Aktivierungsimpuls über die Trenneinrichtung, andererseits einen Aktivierungsimpuls von einem an die Sekundärbusleitung angeschlossenen Busteilnehmer erhalten kann, um die Spannungsversorgung zu aktivieren respektive die Spannungsversorgung auf die volle, an der Sekundärbusleitung für den Normalbetrieb benötigte Busspannung zu setzen. Liefert die Spannungsversorgung in einer vorteilhaften Ausführungsvariante eine minimale Busspannung für die sekundäre Busleitung, die gerade dazu ausreicht, die Trenneinrichtung, die Steuerungselektronik und die Busteilnehmer derart zu versorgen, dass sie einen Aktivierungsimpuls aussenden, respektive die Trenneinrichtung einen solchen übertragen und die Steuerungselektronik einen solchen empfangen und verarbeiten kann, kann auf weitere Maßnahmen zur Gewährleistung einer Impulsübertragung zur Steuerung der Spannungsversorgung verzichtet werden. Die Steuerungselektronik kann nach Erhalt des Aktivierungsimpulses die Spannungsversorgung einschalten, so dass die volle Betriebsspannung an der Sekundärbusleitung zum Betreiben der an diese Leitung angeschlossenen Busteilnehmer anliegt.

Wird die Spannungsversorgung in einer alternativen Ausführungsvariante dagegen gänzlich abgeschaltet, kann über die Primärbusleitung eine Spannung für die Trenneinrichtung und die Steuerungselektronik zur Verfügung gestellt werden, wobei die Steuerungselektronik in diesem Anwendungsfall zwischen der primären Busleitung und der Trenneinrichtung angeordnet sein. Weiterhin kann in diesem Anwendungsfall ein Aktivierungsimpuls seitens eines an die Sekundärbusleitung angeschlossenen Busteilnehmers dadurch erzeugt werden, dass der Busteilnehmer batteriebetrieben ist und aus der Batteriespannung ein entsprechender Aktivierungsimpuls generiert wird, der über die Sekundärbusleitung an die Steuerungselektronik übertragen wird. Diese kann nach Erhalt des Aktivierungsimpulses die Spannungsversorgung einschalten, so dass die volle Betriebsspannung an der Sekundärbusleitung zum Betreiben der an diese Leitung angeschlossenen Busteilnehmer anliegt.

Vorzugsweise können die Spannungsversorgung und die Steuerungselektronik in einer gemeinsamen Einheit konstruktiv zusammen gefasst sein.

Zur Reduzierung des Energieverbrauchs kann vorgesehen sein, dass die Spannungsversorgung automatisiert abgeschaltet wird, beispielsweise wenn eine Störung auf der sekundären Busleitung vorliegt oder sich die Busteilnehmer in einem Leerlaufzustand oder in Betriebsbereitschaft (stand-by) befinden. Hierzu kann die Einheit eine Einrichtung zur Erfassung des über die sekundäre Busleitung übertragenen, d.h. von der Spannungsversorgung abgegebenen Stroms umfassen. Ist die Stromaufnahme der an die Sekundärbusleitung angeschlossenen Busteilnehmer im Vergleich zum Normabetriebsfall gering, weil diese sich in einem Leerlaufbetrieb befinden, ist der von der Spannungsversorgung abgegebene Strom entsprechend gering. Liegt dagegen auf der Busleitung ein Kurzschluss vor, ist der von der Spannungsversorgung abgegebene Strom im Vergleich zum Normalfall besonders hoch. Beide Betriebsfälle können von der Stromerfassungseinrichtung erfasst werden und haben die Folge, dass die Spannungsversorgung von der Steuerungselektronik abgeschaltet oder auf eine Minimalbusspannung umgeschaltet wird. Die Minimalbusspannung kann dazu verwendet werden, die Busteilnehmer, die Steuerungselektronik und/oder die Trenneinrichtung mit Spannung zu versorgen die gerade ausreichend hoch ist, um einen Aktivierungsimpuls über die Trenneinrichtung zu übertragen respektive einen Aktivierungsimpuls von einem an die Sekundärbusleitung angeschlossenen Busteilnehmer auszusenden, so dass die Steuerungselektronik die Spannungsversorgung wieder einschalten kann.

Die Stromerfassungseinrichtung bewirkt, dass der erfindungsgemäße Buskoppler einen dezentral auftretenden Störfall zu erkennen vermag und den gestörten Teilzweig des Bussystems sicher vom restlichen Bussystem trennt.

Zur Erkennung eines Aktivierungs- oder Deaktivierungsimpulses kann die Steuerungselektronik eine Impulsdetektionseinrichtung aufweisen.

Weiterhin vorteilhaft ist es, wenn die Steuerungselektronik eine Einrichtung zur Analyse der Übertragungsqualität der sekundären Busleitung aufweist. Eine derartige Analyseeinrichtung kann eine Spannungsmessvorrichtung umfassen, die die Spannung an der Einspeisestelle der Spannungsversorgung erfasst. Weiterhin kann die Analyseinrichtung dazu eingerichtet sein, eine Information über die an einem Busteilnehmer anliegende Spannung zu erhalten. Auch kann diese Einrichtung dazu ausgebildet sein, die Laufzeit eines Impulses zu messen, der von der Steuerungselektronik an den entsprechenden Busteilnehmer gesendet wird, wobei die Übertragungsqualität aus der eingespeisten Busspannung, der am Busteilnehmer anliegenden Busspannung und dem Abstand des Busteilnehmers zur Steuerungselektronik ermittelbar ist.

Für die Speisung von Busteilnehmern, die eine vergleichsweise hohe Leistungsaufnahme aufweisen, beispielsweise im Bereich von einem oder einigen wenigen Watt, wie dies beispielsweise bei kleinen Elektromotoren, insbesondere dezentralen Heizungspumpen der Fall ist, kann die sekundäre Busleitung zusätzliche Adern aufweisen, über die die Busspannung den Busteilnehmern, d.h. beispielsweise den Elektromotoren, bereitgestellt wird. So kann die sekundäre Busleitung beispielsweise wenigstens vier Adern aufweisen, wobei zwei der Adern zur Bereitstellung der Busspannung an die Busteilnehmer mit der Spannungsversorgung verbunden sind, und die beiden anderen Adern mit der Trenneinrichtung in Verbindung stehen, so dass über diese anderen Andern Daten von der primären Busleitung oder von einem der Busteilnehmer, insbesondere Steuerimpulse, über die Busleitung übertragen werden können. Die Busspannung wird dann von der Spannungsversorgung in zwei separate Adern eingespeist und in Abhängigkeit von auf den anderen Adern empfangenen Steuerimpulsen durch die Steuerelektronik gesteuert.

Des Weiteren kann auch die primäre Busleitung wie die sekundäre Busleitung ausgebildet sein und mindestens vier Adern aufweisen, von denen zwei Adern die Busspannung zur Versorgung angeschlossener Busteilnehmer führen und zwei Adern für die Übertragung von Daten, insbesondere Steuerimpulsen dienen.

Erfindungsgemäß wird des Weiteren ein Verfahren zum Betrieb eines Bussystems vorgeschlagen, mit einem Buskoppler zur Verbindung zumindest eines Leistung über eine Busleitung beziehenden Busteilnehmers mit einer primären Busleitung, mit einer Trenneinrichtung zur galvanischen Entkopplung des Busteilnehmers von der primären Busleitung, wobei der Busteilnehmer über eine sekundäre Busleitung mit dem Buskoppler verbindbar ist, wobei eine Spannungsversorgung des Buskopplers eine Busspannung in die sekundäre Busleitung einspeist und eine Steuerungselektronik des Buskoppler die Spannungsversorgung und die Busspannung der sekundären Busleitung in Abhängigkeit von Steuerimpulsen, die über eine der beiden Busleitungen an die Steuerungselektronik übertragen werden, steuert.

Diese Maßnahmen gewährleisten, dass sich ein Fehlerfall in dem die sekundäre Busleitung umfassenden Teilbussystem nicht auf de übrigen Teile des Bussystems auswirkt.

Vorzugsweise kann die Steuerungselektronik die Spannungsversorgung deaktivieren oder auf eine minimale Busspannung schalten, wenn sie einen Deaktivierungsimpuls empfängt oder eine besonders hohe oder besonders geringe Stromübertragung im Vergleich zum Normalbetriebsfall über die sekundäre Busleitung detektiert.

Weiterhin kann die Steuerungselektronik die Spannungsversorgung aktivieren oder auf eine normale Busspannung schalten, wenn sie einen Aktivierungsimpuls empfängt.

Auch ist es von Vorteil, dass mit der Ab- oder Umschaltung der Spannungsversorgung auf eine minimale Betriebsspannung, die Speisung der Trenneinrichtung und/ oder der Steuerungselektronik aus der sekundären Busleitung auf eine Speisung aus der primären Busleitung, bzw. mit der An- oder Umschaltung der Spannungsversorgung auf eine normale Betriebsspannung, die Speisung der Trenneinrichtung und/ oder der Steuerungselektronik aus der primären Busleitung auf eine Speisung aus der sekundären Busleitung umgeschaltet wird.

Weitere Vorteile und Ausprägungen der Erfindungen werden anhand der nachfolgenden Beschreibung und unter Bezugnahme auf die beigefügten Figuren erläutert.

Es zeigen:
Figur 1: Bussystem 1 mit über Buskopplern 3 an eine Primärbusleitung 2 angeschlossenen Teilnehmern 4, 4a, 4b
Figur 2: Schematische Darstellung eines Buskopplers 3

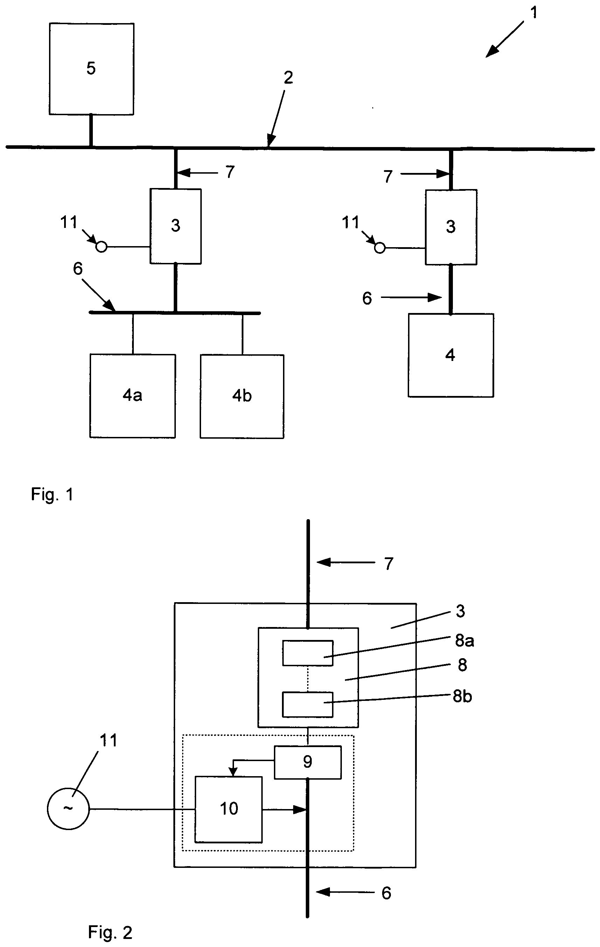

Figur 1 zeigt eine schematische Darstellung eines Bussystems 1 umfassend eine primäre Busleitung 2 in der Art einer Linientopologie, an die eine Hauptsteuerungseinheit 5, nachfolgend Master genannt, sowie über Buskoppler 3 Busteilnehmer 4, 4a, 4b, die auch als Feldgeräte bezeichnet werden können, angeschlossen sind. Die Buskoppler 3 sind über Verbindungsleitungen 7 mit der Primärbusleitung 2 verbunden. Weiterhin stehen die Buskoppler 3 jeweils über eine Busleitungen 6 mit einem Feldgerät 4 oder mehreren Feldgeräten 4a, 4b in Verbindung. In dem rechten Teilsystem des Bussystems 1 gemäß Figur 1 ist dabei lediglich ein Feldgerät 4 an die sekundäre Busleitung 6 angeschlossen. Demgegenüber ist in dem linken Busteilsystem gemäß Figur 1 eine Ausführungsvariante derart gezeigt, dass zwei Feldgeräte 4a, 4b an die Sekundärbusleitung 6 angeschlossen sind, die wiederum unmittelbar mit einem Buskoppler 3 verbunden ist. Der Buskoppler arbeitet aus datenübertragungstechnischer Sicht als Busteilnehmer wobei er Datensignale der Feldgeräte 4a, 4b einerseits oder des Feldgerätes 4 andererseits als einheitliches Bussignal bündelt und zum Master 5 weiterleitet. Darüber hinaus empfängt er Steuerbefehle von dem Master 5 und überträgt diese an die entsprechenden Feldgeräte 4, 4a und 4b. Das Bussystem 1 kann alternativ auch in einer Stern- oder Ringtopologie aufgebaut sein.

Die Buskoppler 3 weisen eine Spannungsversorgung 9 auf, die eine externe Spannungsquelle 11, beispielsweise in Gestalt der üblichen Netzspannung von 230 V, 50 H, in eine Busspannung umwandelt und diese in die sekundäre Busleitung 6 einspeist. Die Einspeisung erfolgt bei jedem Buskoppler, d.h. dezentral, so dass eine zentrale Busspannungseinspeisung in die Primärbusleitung 2 entfallen kann oder in einer alternativen Ausführungsvariante die Primärbusspannungsversorgung zumindest auf eine geringe Leistung eingerichtet werden kann, da lediglich der Master 5 und gegebenenfalls Trenneinrichtungen 8 der Buskoppler 3, letztere hilfsweise, mit einer geringen Spannung versorgt werden brauchen. Der Master 5 kann jedoch auch durch eine eigene Spannungsversorgung verfügen.

Das erfindungsgemäße Bussystem 1 kann insbesondere in der Gebäudeautomation eingesetzt werden. Dabei kann das linke Busteilsystem gemäß Figur 1 einem ersten Raum eines Gebäudes und das rechte Busteilsystem gemäß Figur 1 einem zweiten Raum eines Gebäudes zugeordnet sein. Soll beispielsweise die Raumtemperatur des ersten Raumes zentral von dem Master 5 geregelt werden, kann ein erstes Feldgerät 4a eine Raumbedieneinheit sein, über welche vom Anwender eine Soll-Raumtemperatur vorgegeben werden kann. Des Weiteren kann das zweite Feldgerät 4b ein Aktor in Gestalt eines Stellgliedes, vorzugsweise eine dezentrale Pumpe sein, die die von einem Heizkörper abgegebene Wärme steuert.

Die Feldgeräte 4, 4a und 4b können beliebig im Feld verteilt sein, d.h. beliebig in den einzelnen Räumen eines Gebäudes angeordnet sein, da sie dezentral vor Ort an die dezentrale, sekundäre Busleitung 6 angeschlossen werden. Die Verwendung eines Bussystems 1 zur Steuerung verschiedener Feldgeräte 4, 4a, 4b liegt in erheblich geringeren Kosten sowie einem erheblich geringeren Zeitaufwand für die Projektierung, Installation, Inbetriebnahme und Wartung des Gesamtsystems, da nur ein einziges, zwei oder drei Leitungen umfassendes Kabel, nämlich die Primärbusleitung 2 vom Master 5 zu den Busteilnehmern derart zu verlegen ist, dass alle Busteilnehmer 4, 4a, 4b seriell miteinander in Verbindung stehen.

Figur 2 zeigt eine schematische Darstellung eines Buskopplers 3. Dieser umfasst eine Trenneinrichtung 8 zur galvanischen Kopplung der Primärbusleitung 2 und der Sekundärbusleitung 6. Die Trenneinrichtung 8 kann durch einen elektromagnetischen Übertrager 8 gebildet sein, wobei eine Primärspule 8a und eine Sekundärspule 8b magnetisch über einen Kern miteinander in Wirkverbindung stehen. Alternativ kann die Trenneinrichtung 8 auch durch einen Optokoppler 8 gebildet sein, der elektrische Signale intern auf optischem Wege überträgt. Der Optokoppler 8 umfasst eine erste kombinierte Sende-Empfangseinheit 8a und eine zweite kombinierte Sende-Empfangseinheit 8b, um eine Potentialtrennung zu bewirken. Die Sende- Empfangseinheiten 8a, 8b sind einander zugerichtet und übertragen Daten auf optischem Wege. Die Trenneinrichtung 8 ist mit einer Steuerungselektronik 9 verbunden, die steuerungstechnisch auf eine Spannungsversorgung 10 einwirkt, d.h. diese ein-, ab- oder umschalten kann. Die Steuerungselektronik 9 und die Spannungsversorgung 10 können gemeinsam als eine konstruktive Einheit 12 ausgebildet sein, die eine elektronisch gesteuerte Spannungsversorgung 12 darstellen. Sowohl die Trenneinrichtung 8 als auch die Steuerungselektronik 9 können entweder von der sekundären Busleitung 6 oder hilfsweise von der primären Busleitung 2 mit Spannung versorgt werden. Vorzugsweise kann ein von der Steuerungselektronik gesteuerter Umschalter die Versorgung der Trenneinrichtung 8 und der Steuerungselektronik 9 auf die primäre Busleitung 6 bewirken, wenn die Spannungsversorgung abgeschaltet oder auf eine Minimalbusspannung umgeschaltet wird. Weiterhin kann der Umschalter die Versorgung der Trenneinrichtung 8 und der Steuerungselektronik 9 auf die sekundäre Busleitung 2 bewirken, wenn die Spannungsversorgung angeschaltet oder wieder auf eine Normalbusspannung umgeschaltet wird.

Unter Normalbusspannung und Normalbetrieb ist im Sinne der Erfindung ein solcher Betrieb mit einer Busversorgungsspannung zu verstehen, in dem die Busteilnehmer 4a, 4b einer sekundären Busleitung 6, d.h. insbesondere ein Raumbediengerät 4a und eine dezentrale Pumpe 4b, nicht in einem Bereitschaftsmodus (stand-by) oder im Leerlauf befinden, sondern bei üblicher Busspannung, die je nach verwendeter Art des Busses unterschiedlich sein kann und zwischen 5V und 31V beträgt, in Betrieb sind, d.h. Daten übertragen und/ oder empfangen oder die ihnen als Aktor obliegenden Aufgabe erfüllen.

Wird die sekundäre Busleitung 6 beispielsweise durch die Anbringung eines Befestigungsmittels für ein aufzuhängendes Bild in demjenigen Raum, in dem die sekundäre Busleitung 6 verläuft, beschädigt, so stört dies aufgrund der galvanischen Entkopplung der sekundären Busleitung 6 von der primären Busleitung 2 das übrige Bussystem 1 nicht. Der erfindungsgmäße Buskoppler 3 gewährleistet daher eine besonders hohe Betriebssicherheit für das Bussystem 1.

Die Steuerungselektronik kann ein Impulsdetektor umfassen. Erhält die Steuerungselektronik 9 einen Deaktivierungsimpuls vom Master 5, beispielsweise in Folge eines eingeschränkten Nachtbetriebs, oder von einem Busteilnehmer 4a, beispielsweise von einem Raumbediengerät 4a, an dem ein Anwender mitteilt, dass urlaubsbedingt das Bussystem 1 oder ein Teil des Bussystems 1 nur in einem eingeschränkten Betrieb gehalten oder gar ausgeschaltet werden kann, so schaltet die Steuerungselektronik 9 die Spannungsversorgung ab oder auf eine minimale Busspannung um. Ein Abschalten ist vorzugsweise dann geeignet, wenn die Trenneinrichtung 8 und die Steuerungselektronik 9 von der primären Busleitung 2 gespeist werden, respektive ein Umschalten der Versorgung dieser Komponenten 8, 9 auf die primäre Busleitung 2 vorgenommen wird, und die an den abzuschaltenden Bus 6 angeschlossenen Busteilnehmer in einem Notbetrieb mit einer Batterie ausgestattet sind. Damit wird gewährleistet, dass sowohl von dem Master 5 als auch von einem Busteilnehmer 4a, 4b ein Aktivierungsimpuls ausgesendet und von der Steuerungselektronik 9 empfangen und verarbeitet werden kann, so dass die Spannungsversorgung 10 wieder aktiviert werden kann. In einer alternativen Ausführungsvariante kann auf die Umschaltung der Spannungsversorgung der Trenneinrichtung 8 und der Steuerungselektronik 9 und den Notbatteriebetrieb der Busteilnehmer 4a, 4b verzichtet werden, wenn die Spannungsversorgung 10 nicht vollständig abgeschaltet sondern auf eine minimale Busspannung umgeschaltet wird, so dass eine Impulsübertragung, Impulserkennung und entsprechende Aktivierung der Spannungsversorgung 10 noch möglich ist.

Ist die Steuerungselektronik 9 oder die Spannungsversorgung 10 mit einer Einrichtung zur Erfassung des über die sekundäre Busleitung 2 fließenden Stromes ausgebildet, kann die Spannungsversorgung 10 abgeschaltet oder auf ein Minimum heruntergefahren werden, wenn die Stromaufnahme der an die Sekundärbusleitung 6 angeschlossenen Busteilnehmer 4, 4a, 4b gering ist. Dies ist insbesondere dann der Fall, wenn sie sich in einem Stand-By Modus oder einem Leerlaufbetrieb befinden. Alternativ kann die Spannungsversorgung 10 abgeschaltet oder auf ein Minimum heruntergefahren werden, wenn die über die Sekundärbusleitung 6 übertragene Stromstärke unzulässig hoch ist. Dies wäre der Fall, wenn auf der sekundären Busleitung 6 ein Kurzschluss vorliegt.

Wie bereits beschrieben, ist hierbei zu beachten, dass die Spannungsversorgung 10 durch die Steuerungselektronik 9 aktivierbar eingerichtet sein muss. Dies kann dadurch erreicht werden, dass die Spannungsversorgung nicht vollständig abgeschaltet wird, sondern eine Busspannung liefert, die gerade ausreichend ist, um die angeschlossenen Feldgeräte 4, 4a, 4b mit einer derartigen Spannung zu versorgen, dass sie einen Aktivierungsimpuls über die Sekundärbusleitung 6 an die Steuerungselektronik 9 senden können und die Steuerungselektronik ihrerseits gespeist durch die minimale Busspannung wiederum die Spannungsversorgung aktivieren kann. Alternativ kann vorgesehen sein, dass die Steuerungselektronik 9 auf eine Versorgung von der primären Busleistung 2 umgeschaltet wird und die Feldgeräte 4, 4a, 4b eine Reservebatterie umfassen und mit Hilfe ihrer Energie einen entsprechenden Aktivierungsimpuls respektive eine Einschaltung der Spannungsversorgung bewirken können.

Ein Deaktivierungsimpuls respektive ein Impuls zum Herunterfahren der Spannungsversorgung 10 auf eine minimale Busspannung oder ein Aktivierungsimpuls kann auch von dem Master 5, d.h. von außerhalb des zu steuernden Teilbussystems, an einen oder mehrere Buskoppler 3 gesendet werden, der über die Trenneinrichtung 8 an die Steuerungselektronik 9 übertragen wird. Die Steuerungselektronik 9 kann daraufhin eine entsprechende An-, Ab- oder Umschaltung der Spannungsversorgung 10 vornehmen und damit eine leistungsoptimierte, energieeffiziente Busspannungssteuerung bewirken.

In den Ausführungsbeispielen der Figuren 1 und 2 bestehen die primäre Busleitung 2 und die sekundäre Busleitung 6 jeweils aus Kabeln mit vier Adern. Zwei der Adern der sekundären Busleistung 6 sind mit der Versorgungsspannung 10 verbunden, so dass diese die Busspannung zur Versorgung der angeschlossenen Busteilnehmer 4, 4a, 4b in diese Adern einspeisen kann. Entsprechend sind die Leistungsteile der Busteilnehmer 4, 4a, 4b, die beispielsweise durch Elektromotoren, insbesondere dezentrale Pumpen eines Heizungssystems gebildet sind, mit diesen beiden Adern der sekundären Busleitung 6 verbunden. Die beiden anderen Adern werden für die Übertragung von Daten wie Statusdaten, Messdaten oder Steuerdaten, insbesondere Steuerimpulsen für die Steuerungselektronik 9 zur Aktivierung oder Deaktivierung der Spannungsversorgung 10 oder Verringerung der Busspannung verwendet. Diese Adern stehen mit der Trenneinrichtung 8 in Verbindung, so dass Daten von der primären Busleitung 2 zu der sekundären Busleitung 6 und umgekehrt übertragen werden können.

Die primäre Busleitung 2 ist wie die sekundäre Busleitung 6 ausgebildet. Sie weist vier Adern auf, von denen zwei Adern die Busspannung zur Versorgung angeschlossener Busteilnehmer, beispielsweise der Buskoppler 3 führen, und zwei Adern für die Übertragung von Daten wie Statusdaten, Messdaten oder Steuerdaten, insbesondere Steuerimpulsen für die Steuerungselektronik 9 zur Aktivierung oder Deaktivierung der Spannungsversorgung 10 oder Verringerung der Busspannung dienen.

## Patentansprüche

1. Buskoppler (3) zur Verbindung zumindest eines Leistung über eine Busleitung (6) beziehenden Busteilnehmers (4, 4a, 4b) für die Gebäudeautomation mit einer primären Busleitung (2), mit einer Trenneinrichtung (8) zur galvanischen Entkopplung des Busteilnehmers (4, 4a, 4b) von der primären Busleitung (2), wobei der Busteilnehmer (4, 4a, 4b) über eine sekundäre Busleitung (6) mit dem Buskoppler (3) verbindbar ist, die durch die Trenneinrichtung (8) von der primären Busleitung (2) entkoppelt ist, wobei der Buskoppler (3) eine Spannungsversorgung (10) zur Einspeisung einer Busspannung in die sekundäre Busleitung (6) und eine Steuerungselektronik (9) zur Steuerung der Spannungsversorgung (10) und der Busspannung der sekundären Busleitung (6) aufweist, und die Spannungsversorgung (10) und die Steuerungselektronik (9) eine konstruktive Einheit bilden, **dadurch gekennzeichnet, dass** die Spannungsversorgung (10) in Abhängigkeit von Steuerimpulsen, die über beide Busleitungen (2, 6) an die Steuerungselektronik (9) übertragbar sind, von der Steuerungselektronik (9) steuerbar ist.

2. Buskoppler (3) nach Anspruch 1 oder 2, **dadurch gekennzeichnet, dass** die Trenneinrichtung (8) ein Übertrager mit magnetisch gekoppelten Spulen (8a, 8b) oder ein Optokoppler mit einer optischen Sende- und Empfangseinrichtung (8a, 8b) ist.

3. Buskoppler (3) nach einem der vorherigen Ansprüche, **dadurch gekennzeichnet, dass** die Steuerungselektronik (9) zwischen der Trenneinrichtung (8) und der sekundären Busleitung (6) angeordnet ist.

4. Buskoppler (3) nach einem der vorherigen Ansprüche, **dadurch gekennzeichnet, dass** die Einheit (12) eine Einrichtung zur Erfassung des über die sekundäre Busleitung (6) übertragenen Stroms umfasst.

5. Buskoppler (3) nach einem der vorherigen Ansprüche, **dadurch gekennzeichnet, dass** die Steuerungselektronik (9) eine Impulsdetektionseinrichtung aufweist, die einen Impuls auf einer der Busleitungen (2, 6) erkennt und daraufhin die Spannungsversorgung (10) aktiviert, deaktiviert oder auf eine vorbestimmte Busspannung einstellt.

6. Buskoppler (3) nach einem der vorherigen Ansprüche, **dadurch gekennzeichnet, dass** die sekundäre Busleitung (6) vier Adern aufweist, wobei zwei der Adern zur Bereitstellung der Busspannung an die Busteilnehmer (4, 4a, 4b) mit der Spannungsversorgung (10) verbunden sind und die beiden anderen Adern mit der Trenneinrichtung (8) in Verbindung stehen.

7. Verfahren zum Betrieb eines Bussystems (1) mit einem Buskoppler (3) zur Verbindung zumindest eines Leistung über eine Busleitung beziehenden Busteilnehmers (4, 4a, 4b) für die Gebäudeautomation mit einer primären Busleitung (2), mit einer Trenneinrichtung (8) zur galvanischen Entkopplung des Busteilnehmers (4, 4a, 4b) von der primären Busleitung (2), wobei der Busteilnehmer (4, 4a, 4b) über eine sekundäre Busleitung (6) mit dem Buskoppler (3) verbunden ist, die durch die Trenneinrichtung (8) von der primären Busleitung (2) entkoppelt ist, wobei eine Spannungsversorgung (10) des Buskopplers (3) eine Busspannung in die sekundäre Busleitung (6) einspeist, **dadurch gekennzeichnet, dass** eine Steuerungselektronik (9) des Buskopplers (3) die Spannungsversorgung (10) und die Busspannung der sekundären Busleitung (6) in Abhängigkeit von Steuerimpulsen, die über eine der beiden Busleitungen (2, 6) an die Steuerungselektronik (9) übertragen werden, steuert.

8. Verfahren nach Anspruch 7, **dadurch gekennzeichnet, dass** die Spannungsversorgung (10) eine externe Spannungsquelle (11), insbesondere eine Netzspannung (11), in eine Busspannung umwandelt und diese Busspannung in die sekundäre Busleitung (6) einspeist.

9. Verfahren nach Anspruch 7 oder 8, **dadurch gekennzeichnet, dass** die Steuerungselektronik (9) die Spannungsversorgung (10) deaktiviert oder auf eine minimale Busspannung schaltet, wenn sie einen Deaktivierungsimpuls empfängt oder eine besonders hohe oder besonders geringe Stromübertragung im Vergleich zum Normalbetriebsfall über die sekundäre Busleitung detektiert.

10. Verfahren nach einem der Ansprüche 7 oder 9, **dadurch gekennzeichnet, dass** die Steuerungselektronik (9) die Spannungsversorgung (10) aktiviert oder auf eine normale Busspannung umschaltet, wenn sie einen Aktivierungsimpuls empfängt.

11. Verfahren nach einem der Ansprüche 7 bis 10, **dadurch gekennzeichnet, dass** die sekundäre Busleitung (6) vier Adern aufweist, wobei die Busspannung in zwei der Adern eingespeist wird und die Übertragung von Daten, insbesondere Steuerimpulsen, über die zwei anderen Adern erfolgt.

## Claims

1. Bus coupler (3) for connecting at least one bus subscriber (4, 4a, 4b), which draws power via a bus line (6), for building automation to a primary bus line (2), comprising a disconnecting device (8) for DC-decoupling the bus subscriber (4, 4a, 4b) from the primary bus line (2), wherein the bus subscriber (4, 4a, 4b) can be connected to the bus coupler (3) via a secondary bus line (6) which is decoupled from the primary bus line (2) by the disconnecting device (8), wherein the bus coupler (3) has a voltage supply (10) for feeding a bus voltage into the secondary bus line (6) and has a control electronics system (9) for controlling the voltage supply (10) and the bus voltage of the secondary bus line (6), and the voltage supply (10) and the control electronics system (9) form one structural unit, **characterized in that** the voltage supply (10) can be controlled by the control electronics system (9) depending on control pulses which can be transmitted to the control electronics system (9) via the two bus lines (2, 6).

2. Bus coupler (3) according to Claim 1 or 2, **characterized in that** the disconnecting device (8) is a transmitter with magnetically coupled coils (8a, 8b) or an optocoupler with an optical transmitting and receiving device (8a, 8b).

3. Bus coupler (3) according to one of the preceding claims, **characterized in that** the control electronics system (9) is arranged between the disconnecting device (8) and the secondary bus line (6).

4. Bus coupler (3) according to one of the preceding claims, **characterized in that** the unit (12) comprises a device for detecting the current which is transmitted via the secondary bus line (6).

5. Bus coupler (3) according to one of the preceding claims, **characterized in that** the control electronics system (9) has a pulse detection device which identifies a pulse on one of the bus lines (2, 6) and in response to this activates or deactivates the voltage supply (10) or sets the said voltage supply to a predetermined bus voltage.

6. Bus coupler (3) according to one of the preceding claims, **characterized in that** the secondary bus line (6) has four cores, wherein two of the cores are connected to the voltage supply (10) for the purpose of providing the bus voltage to the bus subscribers (4, 4a, 4b), and the other two cores are connected to the disconnecting device (8).

7. Method for operating a bus system (1) comprising a bus coupler (3) for connecting at least one bus subscriber (4, 4a, 4b), which draws power via a bus line, for building automation to a primary bus line (2), comprising a disconnecting device (8) for DC-decoupling the bus subscriber (4, 4a, 4b) from the primary bus line (2), wherein the bus subscriber (4, 4a, 4b) is connected to the bus coupler (3) via a secondary bus line (6) which is decoupled from the primary bus line (2) by the disconnecting device (8), wherein a voltage supply (10) of the bus coupler (3) feeds a bus voltage into the secondary bus line (6), **characterized in that** a control electronics system (9) of the bus coupler (3) controls the voltage supply (10) and the bus voltage of the secondary bus line (6) depending on control pulses which are transmitted to the control electronics system (9) via one of the two bus lines (2, 6).

8. Method according to Claim 7, **characterized in that** the supply voltage (10) converts an external voltage source (11), in particular a mains voltage (11), into a bus voltage and feeds this bus voltage into the secondary bus line (6).

9. Method according to Claim 7 or 8, **characterized in that** the control electronics system (9) deactivates the voltage supply (10) or switches the said voltage supply to a minimum bus voltage when it receives a deactivation pulse or detects via the secondary bus line a particularly high or particularly low current transmission in comparison to the normal operating situation.

10. Method according to either of Claims 7 and 9, **characterized in that** the control electronics system (9) activates the voltage supply (10) or switches over the said voltage supply to a normal bus voltage when it receives an activation pulse.

11. Method according to one of Claims 7 to 10, **characterized in that** the secondary bus line (6) has four cores, wherein the bus voltage is fed into two of the cores and data, in particular control pulses, is/are transmitted via the other two cores.

## Revendications

1. Coupleur de bus (3) destiné à relier au moins un utilisateur de bus (4, 4a, 4b) prélevant une certaine puissance sur une ligne de bus (6) destinée à la domotique, comportant une ligne de bus primaire (2), un dispositif de séparation (8) permettant le découplage galvanique de l'utilisateur de bus (4, 4a, 4b) de la ligne de bus primaire (2), dans lequel l'utilisateur de bus (4, 4a, 4b) peut être relié au coupleur de bus (3) par l'intermédiaire d'une ligne de bus secondaire (6) qui est découplée de la ligne de bus primaire (2) par le dispositif de séparation (8), dans lequel le coupleur de bus (3) comporte une alimentation en tension (10) destinée à l'application d'une tension de bus à la ligne de bus secondaire (6) et une électronique de commande (9) destinée à commander l'alimentation en tension (10) et la tension de bus de la ligne de bus secondaire (6), et l'alimentation en tension (10) et l'électronique de commande (9) forment une unité structurelle, **caractérisé en ce que** l'alimentation en tension (10) peut être commandée par l'électronique de commande (9) en fonction d'impulsions de commande qui peuvent être transmises par l'intermédiaire des deux lignes de bus (2, 6) à l'électronique de commande (9).

2. Coupleur de bus (3) selon la revendication 1 ou 2, **caractérisé en ce que** le dispositif de séparation (8) est un dispositif de transmission comportant des bobines (8a, 8b) couplées magnétiquement ou un optocoupleur comportant un dispositif d'émission et de réception (8a, 8b).

3. Coupleur de bus (3) selon l'une quelconque des revendications précédentes, **caractérisé en ce que** l'électronique de commande (9) est disposée entre le dispositif de séparation (8) et la ligne de bus secondaire (6).

4. Coupleur de bus (3) selon l'une quelconque des revendications précédentes, **caractérisé en ce que** l'unité (12) comprend un dispositif permettant de détecter le courant transmis sur la ligne de bus secondaire (6).

5. Coupleur de bus (3) selon l'une quelconque des revendications précédentes, **caractérisé en ce que** l'électronique de commande (9) comporte un dispositif de détection d'impulsion qui identifie une impulsion sur l'une des lignes de bus (2, 6) et, lorsque cela se produit, active ou désactive l'alimentation en tension (10) ou la règle à une tension de bus prédéterminée.

6. Coupleur de bus (3) selon l'une quelconque des revendications précédentes, **caractérisé en ce que** la ligne de bus secondaire (6) comporte quatre conducteurs, dans lequel deux des conducteurs sont reliés à l'alimentation en tension (10) pour fournir la tension de bus à l'utilisateur de bus (4, 4a, 4b) et dans lequel les deux autres conducteurs sont en liaison avec le dispositif de séparation (8).

7. Procédé de mise en fonctionnement d'un système de bus (1) comportant un coupleur de bus (3) destiné à relier au moins un utilisateur de bus (4, 4a, 4b) prélevant une certaine puissance sur une ligne de bus destinée à la domotique, comportant une ligne de bus primaire (2), un dispositif de séparation (8) permettant le découplage galvanique de l'utilisateur de bus (4, 4a, 4b) de la ligne de bus primaire (2), dans lequel l'utilisateur de bus (4, 4a, 4b) est relié au coupleur de bus (3) par l'intermédiaire d'une ligne de bus secondaire (6) qui est découplée de la ligne de bus primaire (2) par le dispositif de séparation (8), dans lequel une alimentation en tension (10) du coupleur de bus (3) applique une tension de bus à la ligne de bus secondaire (6), **caractérisé en ce qu'**une électronique de commande (9) du coupleur de bus (3) commande l'alimentation en tension (10) et la tension de bus de la ligne de bus secondaire (6) en fonction d'impulsions de commande qui sont transmises par l'intermédiaire de l'une des deux lignes de bus (2, 6) à l'électronique de commande (9).

8. Procédé selon la revendication 7, **caractérisé en ce que** l'alimentation en tension (10) convertit une source de tension externe (11), notamment une tension du secteur (11), en une tension de bus, et applique ladite tension de bus à la ligne de bus secondaire (6).

9. Procédé selon la revendication 7 ou 8, **caractérisé en ce que** l'électronique de commande (9) désactive l'alimentation en tension (10) ou la fait commuter sur une tension de bus minimale lorsqu'elle reçoit une impulsion de désactivation ou lorsqu'elle détecte sur la ligne de bus secondaire une transmission de courant particulièrement élevée ou particulièrement faible par comparaison au mode de fonctionnement normal.

10. Procédé selon la revendication 7 ou 9, **caractérisé en ce que** l'électronique de commande (9) active l'alimentation en tension (10) ou la fait basculer sur une tension de bus normale lorsqu'elle reçoit une impulsion d'activation.

11. Procédé selon l'une quelconque des revendications 7 à 10, **caractérisé en ce que** la ligne de bus secondaire (6) comporte quatre conducteurs, dans lequel la tension de bus est appliquée à deux des conducteurs et dans lequel la transmission de données, notamment d'impulsions de commande, s'effectue par l'intermédiaire des deux autres conducteurs.
